# EUROPÄISCHE PATENTSCHRIFT

(11) **EP 0 859 900 B1**
(45) Veröffentlichungstag und Bekanntmachung des Hinweises auf die Patenterteilung: **17.10.2001**
(21) Anmeldenummer: 96932475.5
(22) Anmeldetag: 19.08.1996
(51) Int. Cl.: E05F 15/00

(54) **VORRICHTUNG ZUR EINKLEMMERKENNUNG**
DEVICE FOR RECOGNITION OF OBSTRUCTION OF CLOSURE
DISPOSITIF DE DETECTION DE BLOCAGE

(43) Veröffentlichungstag der Anmeldung: 26.08.1998
(73) Patentinhaber: I.E.E. International Electronics & Engineering S.à.r.l., L-2632 Luxembourg (LU); DaimlerChrysler AG, 70567 Stuttgart (DE)
(72) Erfinder: GRIESBACH, Peter, D-75395 Ostelsheim (DE); GAMERDINGER, Hans, D-71263 Weil der Stadt (DE); PETRI, Volker, D-71134 Aidlingen (DE); MICKELER, Reinhold, D-71155 Altdorf (DE); WITTE, Michel, L-8077 Bertrange (LU); LORIG, Roland, D-54675 Sinstelt (DE); SCHMITT, Stefan, D-54293 Trier (DE)
(74) Vertreter: Freylinger, Ernest T.
(86) Internationale Anmeldenummer: EP9603585
(87) Internationale Veröffentlichungsnummer: WO9807945

(56) Entgegenhaltungen:
- EP-A- 0 504 481
- EP-B- 0 823 956
- WO-A-96/04537
- DE-A- 4 201 019
- DE-C- 3 347 945
- DE-C- 19 502 033
- GB-A- 2 300 444
- US-A- 5 847 289

## Beschreibung

Die vorliegende Erfindung betrifft eine Vorrichtung zur Einklemmerkennung bei einem kraftbetätigten Schließelement. Derartige Vorrichtungen werden eingesetzt, um im Falle einer Einklemmung, zum Beispiel eines Körperteiles zwischen zwei sich gegenüberliegenden Schließkanten, die Antriebseinheit des Schließelementes abzuschalten und gegebenenfalls die Bewegung des Schließelementes umzukehren. Zum Einsatz kommen diese Einklemmsicherungen zum Beispiel bei elektrisch betätigten Fensterhebern und Schiebedächern, bei automatischen Fahrzeugtüren, z.B. in Bussen und Bahnen, aber auch in Fahrstuhltüren o.ä.

Die bekannten Vorrichtungen zur Einklemmerkennung basieren im wesentlichen auf zwei unterschiedlichen Funktionsweisen.

Bei einer ersten Art von Einklemmsicherungen wird die Information über eine mögliche Einklemmung aus den Leistungsdaten der Antriebseinheit für das Schließelement entnommen. Dies geschieht bei elektrischen Antrieben zum Beispiel durch die Überwachung des Motorstromes oder des vom Motor abgegebenen Drehmomentes, die beide im Fall einer Einklemmung ansteigen. Bei Überschreiten eines bestimmten Schwellenwertes des jeweiligen Parameters wird der Antriebsmotor abgeschaltet und gegebenenfalls die Bewegungsrichtung umzukehren. Probleme entstehen bei diesen Systemen insbesondere durch Reibungsverluste des Schließelementes an Führungsvorrichtungen und

Dichtelementen für das Schließelement. Diese Reibungsverluste sind stark abhängig von äußeren Faktoren wie z.B. Außentemperatur oder Schmierungszustand, was dazu führt, daß die überwachten Antriebskennwerte stark variieren und es häufig zu Fehlauslösungen kommt.

Bei einer zweiten Art von Einklemmsicherungen werden druckbetätigte Schaltelemente verwendet, die an einer Schließkante angeordnet sind und die bei Druckbeaufschlagung die Antriebseinheit des Schließelementes abschalten bzw. umkehren. Die LU-A-87 942 beschreibt zum Beispiel eine Einklemmsicherung, bei der ein Foliendrucksensor an der Schließkante des Schließelementes angebracht wird. Befindet sich ein Hindernis in der Bewegungsbahn des Schließelementes wird der Foliendrucksensor beim Auftreffen des Hindernisses durch eine direkte Druckbeaufschlagung ausgelöst und die Antriebssteuerung des Schließelementes kehrt die Bewegungsrichtung des Schließelementes um.

Die DE-PS-33 47 945 beschreibt eine Profilleiste an der Schließkante eines beweglichen Schließelementes, bei der eine Einklemmkraft über mehrere, zum Teil V-förmig angeordnete Stege auf eine Schaltrippe übertragen wird. Die Schaltrippe wird hierdurch in Richtung der Schließkraft auf das Schaltelement gepreßt und löst dieses durch direkte Druckbeaufschlagung aus.

Die beiden vorgenannten Vorrichtungen zeichnen sich durch eine sehr hohe Ansprechwahrscheinlichkeit aus, jedoch entstehen Probleme bei geschlossenem Schließelement. Die Abdichtung des Schließelementes gegen eine Schließkante erfolgt bei diesen Vorrichtungen auf Stoß, das heißt die gegenüberliegenden Kanten des Schaltelementes und der Schließkante werden zum Abdichten gegeneinandergedrückt. Das Schaltelement ist somit einer unzulässigen Dauerbelastung ausgesetzt, die nach kurzer Zeit zu seiner Zerstörung führt.

Die DE-PS-196 02 033 beschreibt einen Einklemmschutz für ein Schließelement in einem Kraftfahrzeug, mit einem elastischen U-förmigen Dichtprofil, dessen Schenkel das Schließelement in geschlossenem Zustand seitlich flankieren. Jeder Schenkel ist durch jeweils ein sich zwischen dem freien Schenkelende und der Hohlkammer erstreckendes Stabilisierungselement versteift. Bei einem Einklemmfall leiten die verstärkten Schenkel des Dichtprofils die Einklemmkraft auf zwei längs verlaufende Schaltelemente, die in einer Hohlkammer im Boden des Dichtprofiles derart angeordnet sind, daß sie jeweils in dem unmittelbaren Wirkungsbereich eines Schenkels liegen. Diese Anordnung der Schaltelemente in dem unmittelbaren Wirkungsbereich der Schenkel erweist sich jedoch als problematisch bei harten Schlägen auf das Dichtungsprofil. In der Tat bewirkt die Lage der Schaltelemente eine direkte Übertragung der Einklemmkraft auf den aktiven Bereich des Schaltelementes, so daß harte Schläge, wie sie insbesondere durch bewegte Hindernisse auftreten, ungedämpft auf das Schaltelement weitergeleitet werden und dieses zerstören können.

Die WO 96/04537 beschreibt ein Hohlkammerprofil, das zur Aufnahme eines druckaktivierbaren Sensors dient. Das Hohlkammerprofil weist auf der der ersten Schließkante zugewandten Seite des Hohlprofils eine höhere Verformbarkeit auf als der Zentralbereich. Bei dieser Hohlprofilausgestaltung wird eine Einklemmkraft über einen Kraftübertrager in den Seitenbereich des Hohlprofils eingeleitet. Dadurch wird der Seitenbereich des Hohlprofils in Richtung der Einklemmkraft verformt, wobei der an der Schließkante anliegende Zentralbereich seine Form aufgrund der relativ kleineren Verformbarkeit weitgehend beibehält. Ein in der Hohlkammer angeordnetes Schaltelement erfährt hierdurch in seinen Randbereichen eine Durchbiegung, wobei der aktive Bereich durch eine Schaltnase am Zentralbereich des Hohlprofils entgegen der Richtung der Einklemmkraft ausgelöst wird.

Aufgabe der vorliegenden Erfindung ist es folglich, eine Vorrichtung zur Einklemmerkennung vorzuschlagen, mit der sowohl eine unzulässige Dauerbelastung des Schaltelementes bei geschlossenem Schließelement als auch eine allzu direkte und ungedämpfte Übertragung der Einklemmkraft auf das Schaltelement verhindert werden kann.

Diese Aufgabe wird erfindungsgemäß gelöst durch eine Vorrichtung zur Einklemmerkennung bei einem kraftbetätigten Schließelement, mit einem Schaltelement, das entlang einer ersten Schließkante innerhalb eines elastischen Hohlprofiles angeordnet ist, und einem sich längs erstreckenden Kraftübertrager, der an einen sich längs erstreckenden Seitenbereich des Hohlprofiles angrenzt, so daß eine Einklemmkraft auf den Seitenbereich des Hohlprofiles übertragen wird. Das Hohlprofil umfaßt einen sich längs erstreckenden Zentralbereich, in dem ein aktiver Bereich des Schaltelementes angeordnet ist, während in dem sich längs erstreckenden Seitenbereich ein nicht aktiver Randbereich des Schaltelementes angeordnet ist. Der Seitenbereich weist auf der der ersten Schließkante abgewandten Seite des Hohlprofils eine höhere Verformbarkeit auf als der Zentralbereich. Der Kraftübertrager weist an seinem dem Hohlprofil zugewandten Ende einen seitlichen Ausleger auf, der sich derart bis zu dem Zentralbereich des Hohlprofiles erstreckt, daß die Einklemmkraft durch den Ausleger auf den Zentralbereich übertragbar ist. Hierbei ist anzumerken, daß die erste Schließkante sowohl zu einem beweglichen Schließelement gehören kann, als auch zu einem feststehenden Element, das bei geschlossenem Schließelement mit diesem zum Verschließen einer Öffnung zusammenwirkt. Mit "der der ersten Schließkante abgewandten Seite des Hohlprofiles" wird dabei die Seite des Hohlprofiles bezeichnet, die nicht an der ersten Schließkante anliegt. Mit anderen Worten, die der ersten Schließkante abgewandte Seite des Hohlprofiles bezeichnet diejenige Seite des Hohlprofiles, welche von der zu verschließenden Öffnung her sichtbar ist.

Die erfindungsgemäße Vorrichtung zeichnet sich dadurch aus, daß der Kraftübertrager nicht unmittelbar in dem Verfahrweg des Schließelementes angeordnet ist, sondern außermittig an einen Seitenbereich des Hohlprofiles angrenzt. Dadurch kann das Schließelement in eine Schließposition gefahren werden, in der sich der Kraftübertrager seitlich neben dem Schließelement erstreckt, ohne daß die Einklemmsicherung ausgelöst wird, d.h. ohne daß eine Druckbeaufschlagung des Schaltelementes erfolgt. Das Schließelement kann dabei durch den Kraftübertrager seitlich abgedichtet werden, so daß eine überlappende Abdichtung erfolgt. Es ist anzumerken, daß der aktive Bereich des Schaltelementes sehr wohl in der Verlängerung des Verfahrweges des Schließelementes angeordnet sein kann. In diesem Fall liegt das Schaltelement bei geschlossenem Schließelement geschützt in dem Zwischenraum zwischen dem Schließelement und der Schließkante.

In einem Einklemmfall wird die Schließkraft des Schließelementes durch ein querstehendes Hindernis auf den Kraftübertrager geleitet und durch diesen als Einklemmkraft auf den Seitenbereich des Hohlprofiles übertragen. Der Seitenbereich wird in Richtung der Einklemmkraft verformt, so daß der Kraftübertrager mitsamt dem seitlichen Ausleger eine Verschiebung in Richtung der ersten Schließkante erfährt. Der Ausleger überträgt die Verschiebung auf den Zentralbereich des Hohlprofiles, der hierdurch seinerseits einen Druck auf den aktiven Bereich des Schaltelementes ausübt und letzteres auslöst. Es versteht sich von selbst, daß sowohl der Kraftübertrager als auch der Ausleger hierbei eine kleinere Verformbarkeit aufweisen müssen als der Seitenbereich des Hohlprofiles. Sie sind dazu bevorzugt aus dem gleichen Material gefertigt, aus dem auch der Zentralbereich des Hohlprofiles besteht. Da dieses Material eine gewisse Flexibilität aufweist, werden harte Schläge, wie sie z.B. durch bewegte Hindernisse auftreten können, darüber hinaus nur in abgeschwächter Form auf das Schaltelement übertragen. Ein direktes, ungedämpftes Übertragen des Schlages auf das Schaltelement wird hierdurch wirksam verhindert, was sich besonders positiv auf die Lebensdauer des Schaltelementes auswirkt.

Wird das Schließelement aus der Einklemmposition zurückgefahren, was durch die Umkehrung der Antriebsvorrichtung erfolgt, läßt die Einklemmkraft nach, und das Hohlprofil nimmt aufgrund seiner Elastizität seine ursprüngliche Form wieder ein. Dadurch läßt der Druck, den der Zentralbereich des Hohlprofiles auf den aktiven Bereich des Schaltelementes ausübt nach, und das Schaltelement öffnet erneut.

Ein weiterer Vorteil gegenüber den vorbeschriebenen Anordnungen liegt darin, daß bei der erfindungsgemäßen Vorrichtung die Einwirkrichtung der Einklemmkraft über einen großen Bereich variiert werden kann. Während die Vorrichtungen der oben zitierten Dokumente konstruktionsbedingt nur ausgelöst werden können, wenn die Einklemmkraft im wesentlichen senkrecht zur Schaltelement, also in Normalenrichtung, auftrifft, kann die Einwirkrichtung der Einklemmkraft bei der vorliegenden Vorrichtung je nach Ausrichtung des Kraftübertragers in einem Winkelbereich von etwa 45° liegen. Wird der Kraftübertrager beim Einbau z.B. um 45° aus der Normalenrichtung ausgelenkt, so ist bei einer Einwirkrichtung der Einklemmkraft von 45° gegenüber dem senkrechten Einwirken, eine senkrechte Komponente der Einklemmkraft vorhanden, die ausreicht um das Schaltelement zuverlässig auszulösen. Hierdurch wird ein besonders flexibler Einsatz der vorliegenden Vorrichtung in unterschiedlichen Einbaulagen ermöglicht.

Der Kraftübertrager ist vorteilhaft auf der der ersten Schließkante abgewandten Seite des Hohlprofiles einstückig mit dem Seitenbereich des Hohlprofiles verbunden, und der seitliche Ausleger ist vorteilhaft einstückig mit dem Zentralbereich des Hohlprofiles verbunden. Dadurch bilden der Kraftübertrager, der Ausleger und das Hohlprofil eine leicht herstellbare und zusammen montierbare Einheit. Der Ankoppelpunkt des Kraftübertragers ist dabei bevorzugt derart gewählt, daß eine seitliche Auslenkung des freien Endes des Kraftübertragers den Hohlraum des Hohlprofiles nicht verengt.

Um eine besonders präzise Übertragung der Schaltkraft auf den aktiven Bereich des Schaltelementes zu ermöglichen und dadurch das Ansprechverhalten der Vorrichtung entscheidend zu verbessern, weist der Zentralbereich bevorzugt an der der ersten Schließkante abgewandten Seite des Hohlprofiles eine längs verlaufende Erhebung auf, die in den Hohlraum des Hohlprofiles hineinragt. Die von dem Zentralbereich ausgeübte Schaltkraft wird dann lokal durch diese Erhebung an das Schaltelement übertragen, so daß ein Auslösen des Schaltelementes bereits bei sehr geringer Auslenkung seines Randbereiches zuverlässig erfolgt. Da dabei keine unzulässig hohen Punktlasten auftreten sollen, weist die Erhebung bevorzugt eine Rundung mit entsprechend großem Radius auf, wobei sich zusätzlich eine gute Ausnutzung des aktiven Bereiches des Schaltelementes ergibt.

Die relativ zu dem Zentralbereich höhere Verformbarkeit des Seitenbereiches kann zum Beispiel dadurch erreicht werden, daß der Seitenbereich aus einem weicheren Material gefertigt wird als der Zentralbereich. Durch eine geeignete Materialwahl und eine entsprechende Dimensionierung der Dicke des Seitenbereiches wird dann erreicht, daß der Seitenbereich sich zunächst sehr leicht verformen läßt, was eine hohe Ansprechwahrscheinlichkeit gewährleistet, mit zunehmender Verformung jedoch eine größere Gegenkraft ausübt und dadurch eine weitere Verformung begrenzt. In einer bevorzugten Ausgestaltung des Hohlprofiles sind der Zentralbereich und der Seitenbereich jedoch aus dem gleichen Material gefertigt. In diesem Fall weist der Seitenbereich auf der ersten Schließkante abgewandten Seite des Hohlprofiles eine sich längs erstreckende Hohlkammer auf, welche die Verformung des Seitenbereiches aufnimmt. Diese Ausgestaltung des Hohlprofiles weist große Vorteile in Bezug auf die Herstellung auf, die hier weniger verschiedene Materialien zusammengesetzt werden müssen.

In einer bevorzugten Ausgestaltung der Erfindung umfaßt die Vorrichtung einen Abstandhalter, der sich in einem Bereich des Hohlprofiles auf der der ersten Schließkante abgewandten Seite des Schaltelementes über dessen aktiven Bereich erstreckt. Dieser Abstandhalter umfaßt z.B. einen Auffahrpuffer aus formstabilen Material, der sich im wesentlichen senkrecht zu der ersten Schließkante durch entsprechende Öffnungen in dem Hohlprofil und dem Schaltelement hindurch erstreckt, wobei ein erstes Ende des Auffahrpuffers sich an der ersten Schließkante abstützt und wobei ein zweites Ende des Auffahrpuffers sich jenseits des Schaltelementes erstreckt. Das zweite Ende des Auffahrpuffers kann dabei noch innerhalb des Hohlraumes des Hohlprofiles liegen, oder durch eine entsprechende Öffnung in der der ersten Schließkante abgewandten Wandung des Hohlprofiles aus diesem herausragen. Dieser Auffahrpuffer verhindert, daß eine zweite Schließkante, die der ersten Schließkante bei geschlossenem Schließelement gegenüberliegt, eine direkte Belastung auf das Schaltelement ausübt.

In einer bevorzugten Ausführung umfaßt der Auffahrpuffer eine im wesentlichen senkrecht zu der ersten Schließkante angeordnete Hülse und einen in die Hülse einführbaren Niet, wobei der Innendurchmesser der Hülse im wesentlichen dem Außendurchmesser des Nietschaftes entspricht und wobei die Länge des Nietschaftes kleiner ist als die Tiefe der Hülsenbohrung. Durch diese zweiteilige Ausgestaltung läßt sich der Auffahrpuffer besonders leicht montieren. Darüber hinaus ist nach der Montage des Auffahrpuffers ein Bereich der Hülsenbohrung nicht durch den Schaft des Nietes ausgefüllt. Ist die Hülse dünnwandig ausgelegt, so verleiht dieser nicht ausgefüllte Bereich der Hülse dem Auffahrpuffer eine gewisse Flexibilität, so daß das Schließelement beim Auftreffen der zweiten Schließkante auf den Auffahrpuffer weich abgebremst wird. Dies wirkt sich zum einen natürlich schonend auf die gesamte Antriebsvorrichtung des Schließelementes aus, zum anderen wird die Geräuschbildung beim Auftreffen der zweiten Schließkante deutlich vermindert.

Um eine direkte Beanspruchung des Schaltelementes durch die zweite Schließkante zu verhindern umfaßt die Vorrichtung in einer alternativen Ausgestaltung einen Abstandhalter in Form einer Klammer aus formstabilen Material, die das Hohlprofil von seiner der ersten Schließkante abgewandten Seite her übergreift und die sich an der ersten Schließkante abstützt. Die Klammer ist bevorzugt derart geformt, das sich ihre Form der äußeren Form des Hohlprofiles mit einem gewissen Abstand anpaßt, so daß die Klammer in montiertem Zustand keinen Druck auf die der ersten Schließkante abgewandte Wandung des Hohlprofiles ausübt. Um lediglich das Hohlprofil und nicht den Kraftübertrager zu umgreifen, ist die Klammer seitlich durch entsprechende Öffnungen in dem Kraftübertrager geführt, wobei die Öffnungen derart gestaltet sind, daß eine Übertragung einer Einklemmkraft nicht beeinträchtigt wird. Der wesentliche Vorteil der Klammer gegenüber dem Auffahrpuffer liegt darin, daß das Hohlprofil beim Anbringen der Kammer nicht durchbohrt werden muß und der Hohlraum folglich dicht bleibt. Dadurch ist das in dem Hohlprofil angeordnete Schaltelement optimal gegen Staub und andere Verunreinigungen geschützt. Im Hinblick auf eine Reduzierung der Geräuschbildung ist die Klammer bevorzugt aus einem elastischen Material gefertigt, wie z.B. Metall oder Kunststoff.

In einer weiteren vorteilhaften Variante weist der Abstandhalter eine erste und eine zweite Stützplatte auf, wobei sich die erste Stützplatte in einem Längsbereich des Hohlprofiles über den aktiven Bereich des Schaltelementes erstreckt, und wobei die zweite Stützplatte der ersten Stützplatte auf der entgegengesetzten Seite des Schaltelementes gegenüberliegt. Die erste und zweite Stützplatte sind dabei mittels eines Steges miteinander verbunden, der sich durch den aktiven Bereich des Schaltelementes erstreckt. Dieser Abstandhalter zeichnet sich vor allem durch sehr geringen Materialaufwand und durch eine besonders einfache Montage aus. Dabei müssen weder an dem Hohlprofil noch an dem Kraftübertrager Änderungen vorgenommen werden. Der Abstandhalter wird einfach auf dem Schaltelement angebracht und mitsamt diesem in das Hohlprofil eingezogen. Wie bei der Klammer bleibt der Hohlraum dabei dicht, so daß das Schaltelement gegen Verunreinigungen geschützt ist.

Es ist zu bemerken, daß der Einsatz von Abstandhaltern zum Vermeiden einer direkten Beanspruchung des Schaltelementes durch das Schließelement erst durch die erfindungsgemäße Anordnung des Schaltelementes und des Kraftübertragers ermöglicht wird. In der Tat kann ein solcher Abstandhalter nur dann sinnvoll eingesetzt werden, wenn der Kraftübertrager als Auslöseelement der Vorrichtung nicht unmittelbar in dem Verfahrweg des Schließelementes angeordnet ist. Weiterhin ist zu bemerken, daß sich sämtliche Abstandhalter nur über einen lokal sehr begrenzten Längsbereich des Schaltelementes erstrecken müssen um einen Schutz vor einer direkten Beanspruchung durch das Schließelement zu gewährleisten. Durch die geringe Längsausdehnung der Abstandhalter ist dann sichergestellt, daß das Ansprechverhalten des Schaltelementes nicht beeinträchtigt wird und daß eine Einklemmung auch in dem Bereich der Abstandhalter zuverlässig detektiert wird.

Das Schaltelement umfaßt bevorzugt einen unter dem Namen "Force Sensing Resistor" bekannten Foliendrucksensor. Derartige Sensoren bestehen aus zwei Kunststoffolien, die miteinander verklebt sind, wobei zwischen den Folien Abstandhalter eingeklebt sind. Auf einer der beiden Folien sind Elektrodenbahnen aufgebracht, die in dem aktiven Bereich des Sensors kammartig ineinander eingreifen. Die zweite Folie ist mit einem Halbleiterpolymer beschichtet, der bei einem Druck auf den Sensor, zwischen den beiden kammartig ineinandergreifenden Elektroden einen elektrischen Kontakt herstellt. Je höher die Druckbeaufschlagung ist, desto stärker werden die leitenden Partikel im Polymer zusammengedrückt, und desto kleiner wird der Widerstand dieses elektrischen Kontaktes.

Im folgenden werden nun spezielle Ausgestaltungen der Erfindung anhand der beiliegenden Figuren beschrieben. Es handelt sich hierbei um eine Vorrichtung zur Einklemmerkennung bei einem elektrisch betätigten Seitenfenster eines Kraftfahrzeuges. Es zeigen:
Fig.1: einen Querschnitt durch eine Einklemmsicherung mit einem klammerartigen Abstandhalter
Fig.2: einen Querschnitt durch eine Einklemmsicherung mit einer zweiten Ausführung eines klammerartigen Abstandhalters;
Fig.3: einen Querschnitt durch eine Einklemmsicherung mit Auffahrpuffer;
Fig.4: einen Querschnitt durch eine Einklemmsicherung mit einer weiteren Ausgestaltung eines Abstandhalters.

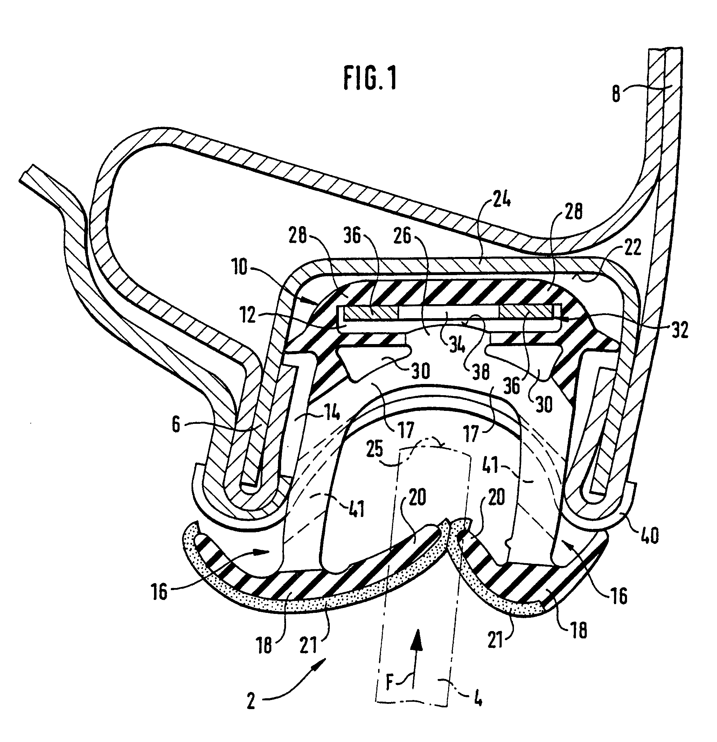

Die in Fig. 1 dargestellte Vorrichtung zur Einklemmerkennung ist als Dichtungsprofil 2 für eine Seitenscheibe 4 eines Kraftfahrzeuges ausgebildet und in einem profilierten Scheibenrahmen 6 in einer Fahrzeugtür 8 angeordnet. Das Dichtungsprofil 2 umfaßt im wesentlichen ein Hohlprofil 10 aus elastischem Material mit einem Hohlraum 12, das geschützt in einer Einbuchtung 14 des Rahmens 6 angeordnet ist, und zwei sich auf beiden Seiten der Seitenscheibe 4 erstreckende Schenkel 16, welche die Scheibe 4 beim Schließen führen und abdichten. Die freien Enden 18 der beiden Schenkel 16 weisen dazu auf der der Scheibe 4 zugewandten Seite jeweils eine flexible Dichtlippe 20 auf, die sich bei geöffneter Scheibe 4 berühren und so ein Eindringen von Verunreinigungen in das innere des Dichtungsprofiles 2 verhindern. Beim Schließen der Seitenscheibe 4 werden die beiden Dichtlippen 20 durch die Scheibe 4 auseinandergedrückt, wodurch sie sich aufgrund ihrer Elastizität dichtend an die Scheibe 4 anlegen. Um eine Geräuschentwicklung beim Entlanggleiten der Seitenscheibe 4 zu vermeiden, sind die Dichtlippen 20 dabei an ihrer der Scheibe 4 zugewandten Seite mit einer Beflockung 21 versehen. An ihrem unteren Ende weisen die Schenkel 16 einen seitlichen Ausleger 17 auf, der sich bis zu dem Zentralbereich 26 des Hohlprofiles 10 erstreckt, und an diesen angrenzt. Die Schenkel 16, die Ausleger 17 und der Zentralbereich 26 des Hohlprofiles 10 sind dabei bevorzugt einstückig ineinander übergehend ausgebildet.

Das Hohlprofil 10 ist entlang einer ersten Schließkante 22 angeordnet, die von dem Grund 24 der Einbuchtung 14 ausgebildet wird und die bei geschlossener Scheibe 4 einer zweiten Schließkante 25 an der Seitenscheibe 4 gegenüberliegt. Es umfaßt einen sich längs (d.h. senkrecht zur Zeichenebene) erstrekkenden Zentralbereich 26 und jeweils seitlich einen sich längs erstreckenden Seitenbereich 28. Die beiden Seitenbereiche 28 des Hohlprofiles sind dabei derart ausgelegt, daß sie auf der der ersten Schließkante 22 abgewandten Seite des Hohlprofiles eine deutlich höhere Verformbarkeit ausweisen als der Zentralbereich 26. Dies wurde in dem dargestellten Fall dadurch erreicht, daß in den Seitenbereichen 28 jeweils eine Hohlkammern 30 ausgeführt ist, die sich entlang des gesamten Hohlprofiles 10 erstreckt. Bei einer Krafteinwirkung senkrecht zur Schließkante 22, werden diese Hohlkammern 30 zusammengedrückt, so daß sich der jeweilige Seitenbereich 28 verhältnismäßig leicht verformt. Es ist anzumerken, daß eine höhere Verformbarkeit der Seitenbereiche 28 bezüglich des Zentralbereiches 26 auch dadurch erreicht werden kann, daß die Seitenbereiche 28 aus einem weicheren Material hergestellt werden als der Zentralbereich 26.

Der Hohlraum 12 der Hohlprofiles 10 erstreckt sich zwischen der Schließkante 22 und den Hohlkammern 30 in Querrichtung über den gesamten Zentralbereich 26 und seitlich in die jeweiligen Seitenbereiche 28 hinein, während er in Längsrichtung entlang des gesamten Hohlprofiles verläuft. Die Dimensionen des Hohlraumes 12 sind derart bemessen, daß ein Schaltelement 32, z.B. ein Foliendrucksensor in dem Hohlraum 12 mit geringem seitlichen und vertikalen Spiel gehalten wird und gegen Verrutschen und Verdrehen gesichert ist.

Der Foliendrucksensor 32 soll bei einer Einklemmung ausgelöst werden um eine Antriebsvorrichtung der Seitenscheibe 4 abzuschalten. Dazu umfaßt der Foliendrucksensor 32 einen aktiven Bereich 34, der mittig entlang dem Hohlraum 12 verläuft, sowie seitlich jeweils einen nicht aktiven Randbereich 36. In einem Einklemmmfall, wenn sich z.B. zwischen der Seitenscheibe 4 und dem Dichtungsprofil 2 ein Hindernis befindet, kann die Seitenscheibe 4 nicht zwischen die beiden Schenkel 16 eingeführt werden. Die Schließkraft, die durch den Pfeil F dargestellt ist, wird folglich als Einklemmkraft auf die mit dem jeweiligen Seitenbereich 28 des Hohlprofiles 10 verbundenen Schenkel 16 übertragen, die die Einklemmkraft F an den jeweiligen Seitenbereich 28 weiterleiten. Jeder Schenkel 16 wirkt somit als Kraftübertrager zwischen einem Hindernis und dem jeweiligen Seitenbereich 28 des Hohlprofiles 10. Dadurch wird der Seitenbereich 28 des Hohlprofiles 10 im Bereich des Ansatzpunktes des Schenkels 16 in Richtung der Einklemmkraft F verformt, wodurch der Schenkel 16, und somit auch der Ausleger 17 und der Zentralbereich 26 eine Verschiebung in Richtung der Einklemmkraft erfahren. Der Zentralbereich 26 wird gegen den aktiven Bereich 34 des Foliendrucksensors 32 gedrückt und löst diesen aus. Wird die Seitenscheibe 4 aus der Einklemmposition zurückgefahren, was durch die Umkehrung der Antriebsvorrichtung erfolgt, läßt die Einklemmkraft F nach, und das Hohlprofil 10 nimmt aufgrund seiner Elastizität seine ursprüngliche Form wieder ein. Dadurch läßt der Druck, den der Zentralbereich 26 des Hohlprofiles 10 auf den aktiven Bereich 34 des Foliendrucksensors 32 ausübt nach, und der Foliendrucksensor 32 öffnet erneut. Es ist zu bemerken, daß aufgrund der erfindungsgemäßen indirekten Auslösung des Foliendrucksensors 32 über die seitlichen Ausleger 17, eine Einklemmung mit einem einzigen Foliendrucksensor 32 auch dann zuverlässig erkannt wird, wenn die Einklemmung nur an einem der beiden Schenkel 16 erfolgt. Dies ist bei einer Vorrichtung mit direkter Auslösung des Schaltelementes, wie sie z.B. weiter oben anhand der DE-PS-195 02 033 beschrieben wurde, nicht möglich. Bei der vorliegenden Vorrichtung erübrigt sich folglich die Verwendung von zwei separaten Schaltelementen mit einer dazugehörigen komplizierteren Verschaltung dieser Schaltelemente.

Um eine präzise Übertragung der Einklemmkraft F auf den aktiven Bereich 34 des Foliendrucksensors 32 zu ermöglichen, weist die der Schließkante 22 abgewandte Wandung des Hohlraumes 12 bevorzugt mittig eine sich längs erstreckende als Schaltnase ausgebildete Erhebung 38 auf, die in den Hohlraum 12 des Hohlprofiles 10 hineinragt. Durch diese Schaltnase 38 wird die von dem Zentralbereich 26 ausgeübte Einklemmkraft lokal an den Foliendrucksensor 32 übertragen, so daß ein Auslösen des Foliendrucksensor 32 bereits bei sehr geringer Auslenkung seines Randbereiches 36 zuverlässig erfolgt. Da hierbei keine unzulässig hohen Punktlasten auftreten sollen, weist die Erhebung bevorzugt eine Rundung mit entsprechend großem Radius auf, wobei sich zusätzlich sich eine gute Ausnutzung des aktiven Bereiches des Schaltelementes ergibt.

Eine weitere Besonderheit der Vorrichtung in Fig. 1 stellt der Abstandhalter 40 dar, der eine direkte Beanspruchung des aktiven Bereiches 34 des Foliendrucksensors 32 durch die Scheibe 4 verhindert. Dieser Abstandhalter 40 in Form einer Klammer aus formstabilen Material, überspannt das Hohlprofil auf dessen der ersten Schließkante 22 abgewandten Seite und stützt sich an den Seitenbereichen der ersten Schließkante 22 ab. Damit die Klammer 40 lediglich das Hohlprofil 10 überspannt und nicht die Schenkel 16, ist sie seitlich durch entsprechende Öffnungen 41 in den Schenkel 16 durchgeführt. Die seitlichen Öffnungen 41 in den Schenkeln 16 müssen dabei derart gestaltet sein, daß eine Übertragung einer Einklemmkraft F, d.h. eine Verschiebung der Schenkel 16 in Richtung der Kraft F, nicht beeinträchtigt wird nicht behindert.

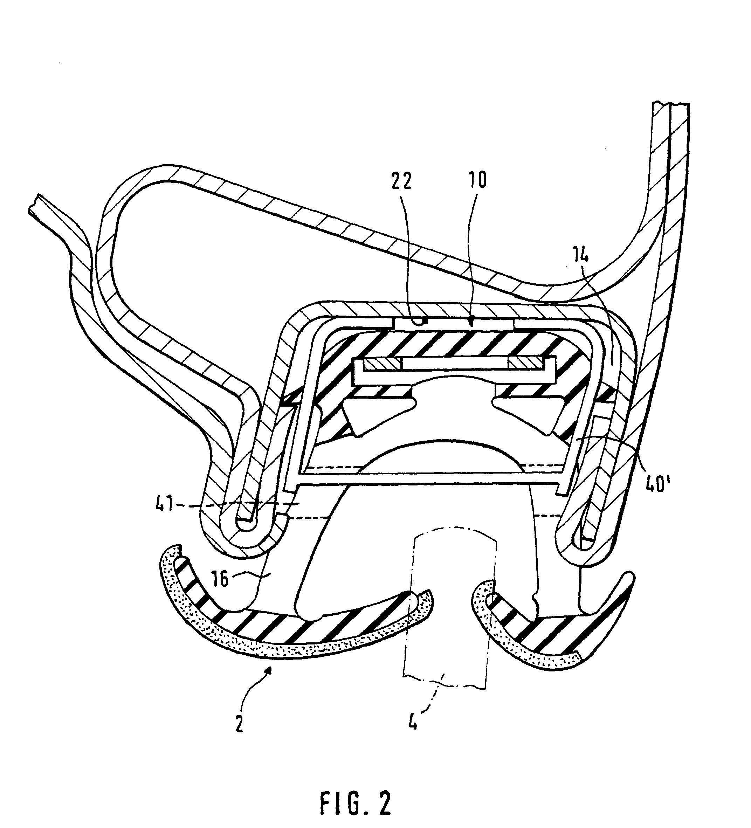

In Fig. 2 ist eine weitere Ausgestaltung eines klammerförmigen Abstandhalters 40' dargestellt. Die Klammer 40' umgreift das Hohlprofil 10 von dessen der ersten Schließkante 22 abgewandten Seite her um sich an der ersten Schfießkante 22 abzustützen. Dazu weist die Klammer 40' in ihrem der Schließkante 22 zugewandten Bereich vorteilhaft die Form der Einbuchtung 14 auf. Auch dieser Abstandhalter 40' ist seitlich durch entsprechende Öffnungen 41 in den Schenkel 16 durchgeführt, die derart gestaltet sind, daß eine Übertragung einer Einklemmkraft nicht beeinträchtigt wird. Der Vorteil dieser Ausführung liegt darin, daß der Abstandhalter 40' bereits vor dem Einbau des Dichtungsprofils 2 in den Scheibenrahmen 6 um das Hohlprofil 10 montiert werden kann. Das Dichtungsprofil 2 mit den Abstandhaltern 40' bilden folglich eine zusammenmontierbare Einheit, die den späteren Einbau in eine Fahrzeugtür vereinfacht. Dies ist mit den Abstandhaltern 40 der Fig. 1 nicht möglich, da diese erst nach dem Einbau des Dichtungsprofils 2 montiert werden können.

Die Klammer 40 und 40' sind bevorzugt aus Stahlblech gefertigt, wodurch sie eine gewisse Elastizität aufweisen. Beim Auffahren der Seitenscheibe 4 auf die Klammer 40 bzw. 40' wird die Seitenscheibe 4 folglich weich abgebremst, was zum einen die Antriebsvorrichtung der Scheibe 4 schont und zum anderen einer starken Geräuschentwicklung entgegenwirkt.

Es ist anzumerken, daß sich die Klammer 40 bzw. 40' nicht über die gesamte Länge des Hohlprofiles 10 erstreckt, sondern nur lokal auf einer kurzen Strekke. In der Tat reicht im allgemeinen bereits ein kurzer Abstandshalter 40, 40' auf der gesamten Länge des Hohlprofiles 10 aus, um eine direkte Belastung des Foliendrucksensor 32 durch die Scheibe 4 wirksam zu verhindern.

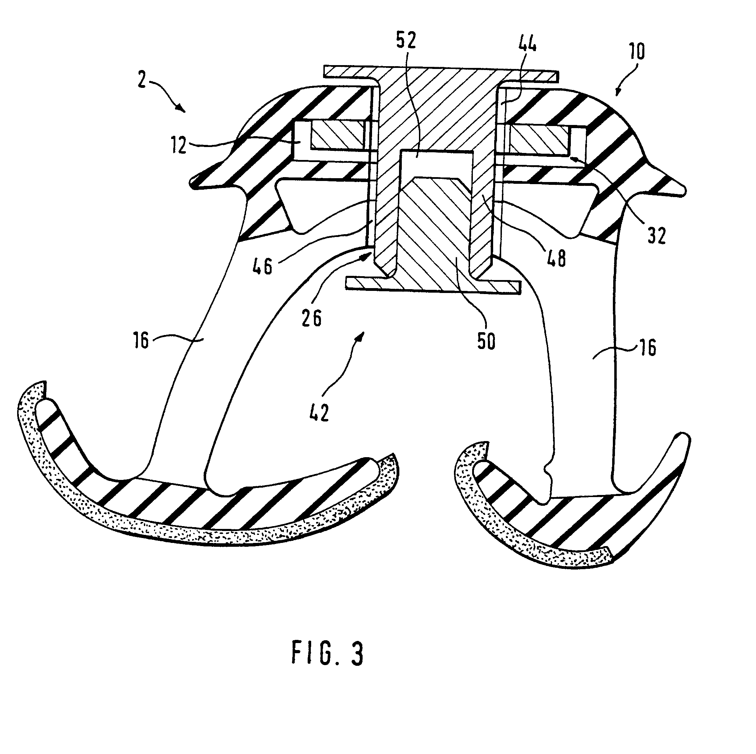

In Fig. 3 ist eine nicht eingebaute Einklemmsicherung mit einem Auffahrpuffer 42 dargestellt. Das Hohlprofil 10 und die Schenkel 16 sind bei dieser Einklemmsicherung im wesentlichen gleich ausgestaltet als in den Fig. 1 und 2. Lediglich in dem Bereich eines Auffahrpuffers 42, die ähnlich wie die Klammer 40 bzw. 40' nur lokal an einigen wenigen Stellen über der Länge des Hohlprofiles 10 angeordnet sind, ergeben sich Unterschiede zu dem Profil 10 der Fig. 1. In diesem Bereich sind sowohl der Zentralbereich 26 des Hohlprofiles 10 als auch der Foliendrucksensor 32 mit einer Bohrung 44 versehen, die sich bei eingebautem Dichtungsprofil 2 im wesentlichen senkrecht zu der ersten Schließkante 22 erstreckt. Der Durchmesser der Bohrung 44 muß dabei derart klein gewählt sein, daß die beiden kammartig ineinander eingreifenden Elektrodenbahnen des Foliendrucksensor 32 nicht vollständig durchtrennt werden, so daß der Foliendrucksensor 32 in Längsrichtung auf beiden Seiten der Bohrung 44 voll funktionsfähig bleibt.

in die Bohrung 44 in dem Hohlprofil 10 und dem Foliendrucksensor 32 ist ein Auffahrpuffer 42 aus formstabilen Material eingeführt, der sich an der ersten Schließkante 22 abstützt und sich im wesentlichen senkrecht zu dieser bis durch den Foliendrucksensor 32 erstreckt. Das freie Ende des Auffahrpuffers 42 kann dabei noch innerhalb des Hohlraumes 12 liegen, oder durch eine entsprechende Öffnung 46 in der der ersten Schließkante 22 abgewandten Wandung des Hohlprofiles 10 aus diesem herausragen.

Der Auffahrpuffer 42 umfaßt vorteilhaft eine im wesentlichen senkrecht zu der ersten Schließkante 22 angeordnete Hülse 48 und einen in die Hülse 48 einführbaren Niet 50. Dabei entspricht der Innendurchmesser der Hülse im wesentlichen dem Außendurchmesser des Nietschaftes, die Länge des Nietschaftes ist jedoch kleiner ist als die Tiefe der Hülsenbohrung. In montiertem Zustand bildet sich folglich eine Hohlkammer 52 in der Hülse aus, die dem Auffahrpuffer 42 eine gewisse Flexibilität verleiht, so daß die Scheibe 4 beim Auftreffen der zweiten Schließkante 25 auf den Auffahrpuffer 42 weich abgebremst wird.

Es ist anzumerken, daß eine Einklemmung in dem Bereich des Auffahrpuffers 42 trotz der Durchbohrung des Foliendrucksensors 32 in diesem Bereich erkannt werden kann. In der Tat wird eine auf die Schenkel 16 auftreffende Einklemmkraft F durch die Schenkel 16 auf einer größeren Länge auf die Seitenbereiche 28 übertragen, so daß die resultierende Verformung der Seitenbereiche 28 eine Verschiebung des Zentralbereiches 26 auch in den Zonen bewirkt, die in Längsrichtung an die Bohrung angrenzen. Hierdurch bleibt eine zuverlässige Auslösung der Einklemmsicherung gewährleistet.

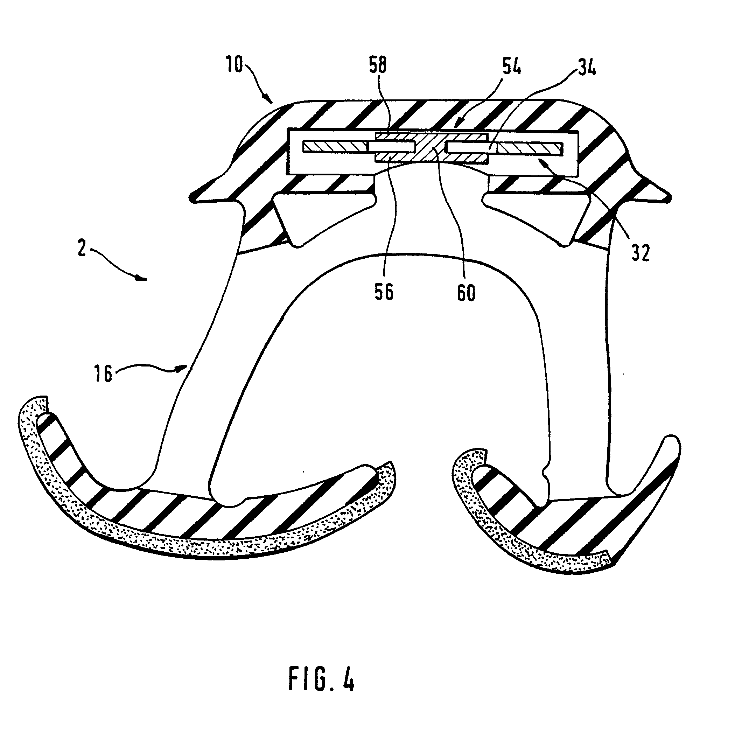

Eine weitere Variante einer Abstandhalters 54 ist in Fig. 4 dargestellt. Dieser weist eine erste 56 und eine zweite 58 Stützplatte auf, wobei sich die erste Stützplatte 56 in einem Längsbereich des Hohlprofiles 10 über den aktiven Bereich 34 des Schaltelementes 32 erstreckt. Die zweite Stützplatte 58 liegt der ersten Stützplatte 56 auf der entgegengesetzten Seite des Schaltelementes 32 gegenüber. Die beiden Stützplatten 56 und 58 sind mittels eines Steges 60 miteinander verbunden, der sich durch den aktiven Bereich 34 des Schaltelementes 32 erstreckt. Dieser Abstandhalter 54 zeichnet sich vor allem durch sehr geringen Materialaufwand und durch eine besonders einfache Montage aus. Dabei müssen weder an dem Hohlprofil 10 noch an dem Kraftübertrager 16 Änderungen vorgenommen werden. Der Abstandhalter 54 wird einfach auf dem Foliendrucksensor 32 angebracht und mitsamt diesem in das Hohlprofil 10 eingezogen. Wie bei den Klammer 40, bzw. 40' bleibt der Hohlraum 12 des Hohlprofiles 10 dabei dicht, so daß das Schaltelement gegen Verunreinigungen geschützt ist. Auch der Abstandhalter 54 erstreckt sich nur über einen lokal sehr begrenzten Längsbereich des Foliendrucksensors 32, so daß eine zuverlässige Auslösung der Einklemmsicherung im Einklemmfall gewährleistet bleibt.

## Patentansprüche (Patentansprüche für folgende(n) Vertragsstaat(en): DE, ES, FR, GB, IT)

1. Vorrichtung zur Einklemmerkennung bei einem kraftbetätigten Schließelement (4), mit einem Schaltelement (32), das entlang einer ersten Schließkante (22) innerhalb eines elastischen Hohlprofiles (10) angeordnet ist, und mindestens einem sich längs erstreckenden Kraftübertrager (16), der an einen sich längs erstreckenden Seitenbereich (28) des Hohlprofiles (10) angrenzt, so daß eine Einklemmkraft (F) auf den Seitenbereich (28) des Hohlprofiles (10) übertragen wird,
wobei das Hohlprofil (10) einen sich längs erstreckenden Zentralbereich (26) umfaßt, in dem ein aktiver Bereich (34) des Schaltelementes (32) angeordnet ist,
wobei der Seitenbereich (28) auf der der ersten Schließkante (22) abgewandten Seite des Hohlprofils (10) eine höhere Verformbarkeit aufweist als der Zentralbereich (26), und
wobei der Kraftübertrager (16) an seinem an das Hohlprofil (10) angrenzenden Ende einen seitlichen Ausleger (17) aufweist, der sich derart bis zu dem Zentralbereich (26) des Hohlprofiles (10) erstreckt, daß die Einklemmkraft (F) durch den Ausleger (17) auf den Zentralbereich (26) übertragbar ist
**gekennzeichnet durch**
einen Abstandhalter (40, 40', 42, 54), der sich in einem Bereich des Hohlprofiles (10) auf der der ersten Schließkante (22) abgewandten Seite des Schaltelementes (32) über dessen aktiven Bereich (34) erstreckt.

2. Vorrichtung nach Anspruch 1, **dadurch gekennzeichnet, daß** der Abstandhalter einen Auffahrpuffer (42) aus formstabilen Material umfaßt, der sich im wesentlichen senkrecht zu der ersten Schließkante (22) durch entsprechende Öffnungen (44) in dem Hohlprofil (10) und dem Schaltelement (32) hindurch erstreckt, wobei ein erstes Ende des Auffahrpuffers (42) sich an der ersten Schließkante (22) abstützt und wobei ein zweites Ende des Auffahrpuffers (42) sich jenseits des Schaltelementes (32) erstreckt.

3. Vorrichtung nach Anspruch 2, **dadurch gekennzeichnet, daß** der Auffahrpuffer (42) eine im wesentlichen senkrecht zu der ersten Schließkante (22) angeordnete Hülse (48) und einen in die Hülse (48) einführbaren Niet (50) umfaßt, wobei der Innendurchmesser der Hülse (48) im wesentlichen dem Außendurchmesser des Nietschaftes entspricht und wobei die Länge des Nietschaftes kleiner ist als die Tiefe der Hülsenbohrung.

4. Vorrichtung nach Anspruch 1, **dadurch gekennzeichnet, daß** der Abstandhalter eine Klammer (40, 40') aus formstabilen Material umfaßt, die das Hohlprofil (10) von seiner der ersten Schließkante (22) abgewandten Seite übergreift und die sich an der ersten Schließkante (22) abstützt.

5. Vorrichtung nach Anspruch 4, **dadurch gekennzeichnet, daß** die Klammer (40, 40') aus einem elastischen Material besteht.

6. Vorrichtung nach Anspruch 1, **dadurch gekennzeichnet, daß** der Abstandhalter eine erste und eine zweite Stützplatte (56 und 58) aufweist, wobei sich die erste Stützplatte (56) in einem Längsbereich des Hohlprofiles (10) über den aktiven Bereich (34) des Schaltelementes (32) erstreckt, und wobei die zweite Stützplatte (58) der ersten Stützplatte (56) auf der entgegengesetzten Seite des Schaltelementes (32) gegenüberliegt, und daß die erste und zweite Stützplatte (56 und 58) mittels eines Steges (60) miteinander verbunden sind, der sich durch den aktiven Bereich (34) des Schaltelementes (32) erstreckt.

7. Vorrichtung nach einem der vorhergehenden Ansprüche, **dadurch gekennzeichnet, daß** der Kraftübertrager (16) auf der der ersten Schließkante (22) abgewandten Seite des Hohlprofiles (10) an dessen Seitenbereich (28) angekoppelt ist.

8. Vorrichtung nach einem der vorhergehenden Ansprüche, **dadurch gekennzeichnet, daß** der seitliche Ausleger (17) einstückig mit dem Zentralbereich (26) des Hohlprofiles (10) verbunden ist, und daß der Zentralbereich (26) auf der der ersten Schließkante (22) abgewandten Seite des Hohlprofiles (10) eine längs verlaufende Erhebung (38) aufweist, die in den Hohlraum (12) des Hohlprofiles (10) hineinragt.

9. Vorrichtung nach einem der vorhergehenden Ansprüche, **dadurch gekennzeichnet, daß** der Seitenbereich (28) auf der der ersten Schließkante (22) abgewandten Seite des Hohlprofiles (10) eine sich längs erstreckende Hohlkammer (30) aufweist.

10. Vorrichtung nach einem der vorhergehenden Ansprüche, **dadurch gekennzeichnet, daß** das Schaltelement (32) einen Foliendrucksensor umfaßt.

## Patentansprüche (Patentansprüche für folgende(n) Vertragsstaat(en): LU, NL, PT, SE)

1. Vorrichtung zur Einklemmerkennung bei einem kraftbetätigten Schließelement (4), mit
einem Schaltelement (32), das entlang einer ersten Schließkante (22) innerhalb eines elastischen Hohlprofiles (10) angeordnet ist, wobei das Hohlprofil (10) einen sich längs erstreckenden Zentralbereich (26) umfaßt, in dem ein aktiver Bereich (34) des Schaltelementes (32) angeordnet ist, und mindestens einem sich längs erstreckenden Kraftübertrager (16), der an einen sich längs erstreckenden Seitenbereich (28) des Hohlprofiles (10) angrenzt, so daß eine Einklemmkraft (F) auf den Seitenbereich (28) des Hohlprofiles (10) übertragen wird,
**dadurch gekennzeichnet,**
**daß** der Seitenbereich (28) auf der der ersten Schließkante (22) abgewandten Seite des Hohlprofils (10) eine höhere Verformbarkeit aufweist als der Zentralbereich (26), und
**daß** der Kraftübertrager (16) an seinem an das Hohlprofil (10) angrenzenden Ende einen seitlichen Ausleger (17) aufweist, der sich derart bis zu dem Zentralbereich (26) des Hohlprofiles (10) erstreckt, daß die Einklemmkraft (F) durch den Ausleger (17) auf den Zentralbereich (26) übertragbar ist.

2. Vorrichtung nach Anspruch 1, **dadurch gekennzeichnet, daß** der Kraftübertrager (16) auf der der ersten Schließkante (22) abgewandten Seite des Hohlprofiles (10) an dessen Seitenbereich (28) angekoppelt ist.

3. Vorrichtung nach Anspruch 1 oder 2, **dadurch gekennzeichnet, daß** der seitliche Ausleger (17) einstückig mit dem Zentralbereich (26) des Hohlprofiles (10) verbunden ist, und daß der Zentralbereich (26) auf der der ersten Schließkante (22) abgewandten Seite des Hohlprofiles (10) eine längs verlaufende Erhebung (38) aufweist, die in den Hohlraum (12) des Hohlprofiles (10) hineinragt.

4. Vorrichtung nach einem der vorhergehenden Ansprüche, **dadurch gekennzeichnet, daß** der Seitenbereich (28) auf der der ersten Schließkante (22) abgewandten Seite des Hohlprofiles (10) eine sich längs erstreckende Hohlkammer (30) aufweist.

5. Vorrichtung nach einem der vorhergehenden Ansprüche, **gekennzeichnet durch** einen Abstandhalter (40, 40', 42, 54), der sich in einem Bereich des Hohlprofiles (10) auf der der ersten Schließkante (22) abgewandten Seite des Schaltelementes (32) über dessen aktiven Bereich (34) erstreckt.

6. Vorrichtung nach Anspruch 5, **dadurch gekennzeichnet, daß** der Abstandhalter einen Auffahrpuffer (42) aus formstabilen Material umfaßt, der sich im wesentlichen senkrecht zu der ersten Schließkante (22) durch entsprechende Öffnungen (44) in dem Hohlprofil (10) und dem Schaltelement (32) hindurch erstreckt, wobei ein erstes Ende des Auffahrpuffers (42) sich an der ersten Schließkante (22) abstützt und wobei ein zweites Ende des Auffahrpuffers (42) sich jenseits des Schaltelementes (32) erstreckt.

7. Vorrichtung nach Anspruch 6, **dadurch gekennzeichnet, daß** der Auffahrpuffer (42) eine im wesentlichen senkrecht zu der ersten Schließkante (22) angeordnete Hülse (48) und einen in die Hülse (48) einführbaren Niet (50) umfaßt, wobei der Innendurchmesser der Hülse (48) im wesentlichen dem Außendurchmesser des Nietschaftes entspricht und wobei die Länge des Nietschaftes kleiner ist als die Tiefe der Hülsenbohrung.

8. Vorrichtung nach Anspruch 5, **dadurch gekennzeichnet, daß** der Abstandhalter eine Klammer (40, 40') aus formstabilen Material umfaßt, die das Hohlprofil (10) von seiner der ersten Schließkante (22) abgewandten Seite übergreift und die sich an der ersten Schließkante (22) abstützt.

9. Vorrichtung nach Anspruch 8, **dadurch gekennzeichnet, daß** die Klammer (40, 40') aus einem elastischen Material besteht.

10. Vorrichtung nach Anspruch 5, **dadurch gekennzeichnet, daß** der Abstandhalter eine erste und eine zweite Stützplatte (56 und 58) aufweist, wobei sich die erste Stützplatte (56) in einem Längsbereich des Hohlprofiles (10) über den aktiven Bereich (34) des Schaltelementes (32) erstreckt, und wobei die zweite Stützplatte (58) der ersten Stützplatte (56) auf der entgegengesetzten Seite des Schaltelementes (32) gegenüberliegt, und daß die erste und zweite Stützplatte (56 und 58) mittels eines Steges (60) miteinander verbunden sind, der sich durch den aktiven Bereich (34) des Schaltelementes (32) erstreckt.

11. Vorrichtung nach einem der vorhergehenden Ansprüche, **dadurch gekennzeichnet, daß** das Schaltelement (32) einen Foliendrucksensor umfaßt.

## Claims (Claims for the following Contracting State(s): DE, ES, FR, GB, IT)

1. A device for detection of trapping in a power-operated closing element (4) with a switching element (32), which is arranged along a first closing edge (22) within an elastic hollow section (10), and at least one force transmitter (16) extending longitudinally, which abuts against a side area (28) of said hollow section (10) extending longitudinally, so that a trapping force (F) is transmitted to said side area (28) of said hollow section (10),
said hollow section (10) comprising a central area (26) extending longitudinally, in which an active area (34) of said switching element (32) is arranged,
said side area (28) being more deformable on the side of said hollow section (10) facing away from said first closing edge (22) than said central area (26), and
said force transmitter (16) having at its end abutting against said hollow section (10) a lateral arm (17), which extends to said central area (26) of said hollow section (10) in such a way that said trapping force (F) can be transmitted by said arm (17) to said central area (26).
**characterised by**
a spacer (40, 40', 42, 54), which extends in an area of said hollow section (10) on the side of said switching element (32) facing away from said first closing edge (22) over its active area (34).

2. The device according to claim 1, **characterised in that** said spacer comprises an impact buffer (42) made from dimensionally stable material, which extends essentially at right angles to said first closing edge (22) through suitable openings (44) in said hollow section (10) and said switching element (32), a first end of said impact buffer (42) resting on said first closing edge (22) and a second end of said impact buffer (42) extending beyond said switching element (32).

3. The device according to claim 2, **characterised in that** said impact buffer (42) comprises a sleeve (48) arranged essentially at right angles to said first closing edge (22) and a rivet (50), which can be introduced into said sleeve (48), the inside diameter of said sleeve (48) corresponding essentially to the outside diameter of the rivet shank and the length of the rivet shank being smaller than the depth of the sleeve hole.

4. The device according to claim 1, **characterised in that** said spacer comprises a clamp (40, 40') made from dimensionally stable material, which encloses said hollow section (10) from its side facing away from said first closing edge (22) and rests on said first closing edge (22).

5. The device according to claim 4, **characterised in that** said clamp (40, 40') consists of an elastic material.

6. The device according to claim 1, **characterised in that** said spacer has a first and a second supporting plate (56 and 58), said first supporting plate (56) extending in a longitudinal area of said hollow section (10) over said active area (34) of said switching element (32) and said second supporting plate (58) being opposite said first supporting plate (56) on the opposite side of said switching element (32), and that said first and second supporting plates (56 and 58) are connected to each other by a segment (60), which extends through said active area (34) of said switching element (32).

7. The device according to one of the preceding claims, **characterised in that** said force transmitter (16) on the side of said hollow section (10) facing away from said first closing edge (22) is connected to its side area (28).

8. The device according to one of the preceding claims, **characterised in that** said lateral arm (17) is connected in one piece to said central area (26) of said hollow section (10), and that said central area (26) on the side of said hollow section (10) facing away from said first closing edge (22) has an elevation (38) extending longitudinally, which projects into the hollow space (12) of said hollow section (10).

9. The device according to one of the preceding claims, **characterised in that** said side area (28) on the side of said hollow section (10) facing away from said first closing edge (22) has a hollow chamber (30) extending longitudinally.

10. The device according to one of the preceding claims, **characterised in that** said switching element (32) comprises a film pressure sensor.

## Claims (Claims for the following Contracting State(s): LU, NL, PT, SE)

1. A device for detection of trapping in a power-operated closing element (4) with a switching element (32), which is arranged along a first closing edge (22) within an elastic hollow section (10), said hollow section (10) comprising a central area (26) extending longitudinally, in which an active area (34) of said switching element (32) is arranged and at least one force transmitter (16) extending longitudinally, which abuts against a side area (28) of said hollow section (10) extending longitudinally, so that a trapping force (F) is transmitted to said side area (28) of said hollow section (10),
**characterised in that**
said side area (28) is more deformable on the side of said hollow section (10) facing away from said first closing edge (22) than said central area (26), and
**in that** said force transmitter (16) has at its end abutting against said hollow section (10) a lateral arm (17), which extends to said central area (26) of said hollow section (10) in such a way that said trapping force (F) can be transmitted by said arm (17) to said central area (26).

2. The device according to claim 1, **characterised in that** said force transmitter (16) on the side of said hollow section (10) facing away from said first closing edge (22) is connected to its side area (28).

3. The device according to claim 1 or 2, **characterised in that** said lateral arm (17) is connected in one piece to said central area (26) of said hollow section (10), and that said central area (26) on the side of said hollow section (10) facing away from said first closing edge (22) has an elevation (38) extending longitudinally, which projects into the hollow space (12) of said hollow section (10).

4. The device according to one of the preceding claims, **characterised in that** said side area (28) on the side of said hollow section (10) facing away from said first closing edge (22) has a hollow chamber (30) extending longitudinally.

5. The device according to one of the preceding claims, **characterised by** a spacer (40, 40', 42, 54), which extends in an area of said hollow section (10) on the side of said switching element (32) facing away from said first closing edge (22) over its active area (34).

6. The device according to claim 5, **characterised in that** said spacer comprises an impact buffer (42) made from dimensionally stable material, which extends essentially at right angles to said first closing edge (22) through suitable openings (44) in said hollow section (10) and said switching element (32), a first end of said impact buffer (42) resting on said first closing edge (22) and a second end of said impact buffer (42) extending beyond said switching element (32).

7. The device according to claim 6, **characterised in that** said impact buffer (42) comprises a sleeve (48) arranged essentially at right angles to said first closing edge (22) and a rivet (50), which can be introduced into said sleeve (48), the inside diameter of said sleeve (48) corresponding essentially to the outside diameter of the rivet shank and the length of the rivet shank being smaller than the depth of the sleeve hole.

8. The device according to claim 5, **characterised in that** said spacer comprises a clamp (40, 40') made from dimensionally stable material, which encloses said hollow section (10) from its side facing away from said first closing edge (22) and rests on said first closing edge (22).

9. The device according to claim 8, **characterised in that** said clamp (40, 40') consists of an elastic material.

10. The device according to claim 5, **characterised in that** said spacer has a first and a second supporting plate (56 and 58), said first supporting plate (56) extending in a longitudinal area of said hollow section (10) over said active area (34) of said switching element (32) and said second supporting plate (58) being opposite said first supporting plate (56) on the opposite side of said switching element (32), and that said first and second supporting plates (56 and 58) are connected to each other by a segment (60), which extends through said active area (34) of said switching element (32).

11. The device according to one of the preceding claims, **characterised in that** said switching element (32) comprises a film pressure sensor.

## Revendications (Revendications pour l'(les) Etat(s) contractant(s) suivant(s): DE, ES, FR, GB, IT)

1. Dispositif de détection du serrage dans un élément de fermeture (4) actionné par une force, avec un élément de commutation (32) qui est disposé à l'intérieur d'un profilé creux (10) élastique le long d'un premier bord de fermeture (22), et avec au moins un élément (16) de transmission de force qui s'étend longitudinalement et qui vient buter contre une zone latérale (28), s'étendant longitudinalement, du profilé creux (10) de telle sorte qu'une force de serrage (F) soit transmise sur la zone latérale (28) du profilé creux (10),
dans lequel le profilé creux (10) comprend une zone centrale (26) qui s'étend longitudinalement et dans laquelle est disposée une zone active (34) de l'élément de commutation (32),
la zone latérale (28) présentant sur le côté du profilé creux (10) non tourné vers le premier bord de fermeture (22) une déformabilité plus élevée que la zone centrale (26), et
dans lequel, sur son extrémité adjacente au profilé creux (10), l'élément (16) de transmission de force présente un bras latéral (17) qui s'étend jusqu'à la zone centrale (26) du profilé creux (10) de telle sorte que la force de serrage (F) puisse être transmise par le bras (17) à la zone centrale (26),
**caractérisé par**
un écarteur (40, 40', 42, 54) qui s'étend dans une zone du profilé creux (10) située sur le côté de l'élément de commutation (32) qui n'est pas tourné vers le premier bord de fermeture (22), dans la zone active (34) de l'élément de commutation.

2. Dispositif selon la revendication 1, **caractérisé en ce que** l'écarteur comprend un tampon de passage (42) en un matériau de forme stable, qui s'étend à travers des ouvertures (44) appropriées ménagées dans le profilé creux (10) et dans l'élément de commutation (32) essentiellement perpendiculairement au premier bord de fermeture (22), une première extrémité du tampon de passage (42) s'appuyant sur le premier bord de fermeture (22) et une deuxième extrémité du tampon de passage (42) s'étendant de chaque côté de l'élément de commutation (32).

3. Dispositif selon la revendication 2, **caractérisé en ce que** le tampon de passage (42) comprend une douille (48) disposée essentiellement perpendiculairement au premier bord de fermeture (22) et un rivet (50) qui peut être inséré dans la douille (48), le diamètre intérieur de la douille (48) correspondant essentiellement au diamètre extérieur de la tige du rivet, et la longueur de la tige du rivet étant inférieure à la profondeur de l'alésage de la douille.

4. Dispositif selon la revendication 1, **caractérisé en ce que** l'écarteur comprend une pince (40, 40') en un matériau de forme stable, qui chevauche le profilé creux (10) par son côté non tourné vers le premier bord de fermeture (22) et qui s'appuie sur le premier bord de fermeture (22).

5. Dispositif selon la revendication 4, **caractérisé en ce que** la pince (40, 40') est constituée d'un matériau élastique.

6. Dispositif selon la revendication 1, **caractérisé en ce que** l'écarteur présente une première et une deuxième plaque de soutien (56 et 58), la première plaque de soutien (56) s'étendant dans une zone longitudinale du profilé creux (10) dans la zone active (34) de l'élément de commutation (32) et la deuxième plaque de soutien (58) étant opposée à la première plaque de soutien (56) sur le côté opposé de l'élément de commutation (32), et **en ce que** la première et la deuxième plaque de soutien (56 et 58) sont reliées l'une à l'autre par l'intermédiaire d'une traverse (60) qui s'étend dans la zone active (34) de l'élément de commutation (32).

7. Dispositif selon l'une des revendications précédentes, **caractérisé en ce que** l'élément (16) de transmission de force du côté du profilé creux (10) qui n'est pas tourné vers le premier bord de fermeture (22) est couplé à la zone latérale (28) du profilé creux,

8. Dispositif selon l'une des revendications précédentes, **caractérisé en ce que** le bras latéral (17) est relié d'un seul tenant à la zone centrale (26) du profilé creux (10) et **en ce que** la zone centrale (26) présente du côté du profilé creux (10) qui n'est pas tourné vers le premier bord de fermeture (22) une saillie (38) qui s'étend longitudinalement et qui pénètre dans l'espace creux (12) du profilé creux (10).

9. Dispositif selon l'une des revendications précédentes, **caractérisé en ce que** la zone latérale (28) située du côté du profilé creux (10) qui n'est pas tourné vers le premier bord de fermeture (22) présente une chambre creuse (30) qui s'étend longitudinalement.

10. Dispositif selon l'une des revendications précédentes, **caractérisé en ce que** l'élément de commutation (32) comprend un capteur de pression en feuille.

## Revendications (Revendications pour l'(les) Etat(s) contractant(s) suivant(s): LU,NL, PT, SE)

1. Dispositif de détection du serrage dans un élément de fermeture (4) actionné par une force, avec un élément de commutation (32) qui est disposé à l'intérieur d'un profilé creux (10) élastique le long d'un premier bord de fermeture (22), dans lequel le profilé creux (10) comprend une zone centrale (26) qui s'étend longitudinalement et dans laquelle est disposée une zone active (34) de l'élément de commutation (32), et avec au moins un élément (16) de transmission de force qui s'étend longitudinalement et qui vient buter contre une zone latérale (28), s'étendant longitudinalement, du profilé creux (10) de telle sorte qu'une force de serrage (F) soit transmise sur la zone latérale (28) du profilé creux (10),
**caractérisé en ce que**
la zone latérale (28) présentant sur le côté du profilé creux (10) non tourné vers le premier bord de fermeture (22) une déformabilité plus élevée que la zone centrale (26), et
**en ce que**, sur son extrémité adjacente au profilé creux (10), l'élément (16) de transmission de force présente un bras latéral (17) qui s'étend jusqu'à la zone centrale (26) du profilé creux (10) de telle sorte que la force de serrage (F) puisse être transmise par le bras (17) à la zone centrale (26).

2. Dispositif selon la revendication 1, **caractérisé en ce que** l'élément (16) de transmission de force du côté du profilé creux (10) qui n'est pas tourné vers le premier bord de fermeture (22) est couplé à la zone latérale (28) du profilé creux.

3. Dispositif selon la revendication 1 ou 2, **caractérisé en ce que** le bras latéral (17) est relié d'un seul tenant à la zone centrale (26) du profilé creux (10) et **en ce que** la zone centrale (26) présente du côté du profilé creux (10) qui n'est pas tourné vers le premier bord de fermeture (22) une saillie (38) qui s'étend longitudinalement et qui pénètre dans l'espace creux (12) du profilé creux (10).

4. Dispositif selon l'une des revendications précédentes, **caractérisé en ce que** la zone latérale (28) située du côté du profilé creux (10) qui n'est pas tourné vers le premier bord de fermeture (22) présente une chambre creuse (30) qui s'étend longitudinalement.

5. Dispositif selon l'une des revendications précédentes, **caractérisé par** un écarteur (40, 40', 42, 54) qui s'étend dans une zone du profilé creux (10) située sur le côté de l'élément de commutation (32) qui n'est pas tourné vers le premier bord de fermeture (22), dans la zone active (34) de l'élément de commutation.

6. Dispositif selon la revendication 5, **caractérisé en ce que** l'écarteur comprend un tampon de passage (42) en un matériau de forme stable, qui s'étend à travers des ouvertures (44) appropriées ménagées dans le profilé creux (10) et dans l'élément de commutation (32) essentiellement perpendiculairement au premier bord de fermeture (22), une première extrémité du tampon de passage (42) s'appuyant sur le premier bord de fermeture (22) et une deuxième extrémité du tampon de passage (42) s'étendant de chaque côté de l'élément de commutation (32).

7. Dispositif selon la revendication 6, **caractérisé en ce que** le tampon de passage (42) comprend une douille (48) disposée essentiellement perpendiculairement au premier bord de fermeture (22) et un rivet (50) qui peut être inséré dans la douille (48), le diamètre intérieur de la douille (48) correspondant essentiellement au diamètre extérieur de la tige du rivet, et la longueur de la tige du rivet étant inférieure à la profondeur de l'alésage de la douille.

8. Dispositif selon la revendication 5, **caractérisé en ce que** l'écarteur comprend une pince (40, 40') en un matériau de forme stable, qui chevauche le profilé creux (10) par son côté non tourné vers le premier bord de fermeture (22) et qui s'appuie sur le premier bord de fermeture (22).

9. Dispositif selon la revendication 4, **caractérisé en ce que** la pince (40, 40') est constituée d'un matériau élastique.

10. Dispositif selon la revendication 5, **caractérisé en ce que** l'écarteur présente une première et une deuxième plaque de soutien (56 et 58), la première plaque de soutien (56) s'étendant dans une zone longitudinale du profilé creux (10) dans la zone active (34) de l'élément de commutation (32) et la deuxième plaque de soutien (58) étant opposée à la première plaque de soutien (56) sur le côté opposé de l'élément de commutation (32), et **en ce que** la première et la deuxième plaque de soutien (56 et 58) sont reliées l'une à l'autre par l'intermédiaire d'une traverse (60) qui s'étend dans la zone active (34) de l'élément de commutation (32).

11. Dispositif selon l'une des revendications précédentes, **caractérisé en ce que** l'élément de commutation (32) comprend un capteur de pression en feuille.
